# EUROPÄISCHE PATENTSCHRIFT

(11) **EP 2 375 526 B1**
(45) Veröffentlichungstag und Bekanntmachung des Hinweises auf die Patenterteilung: **08.06.2016**
(21) Anmeldenummer: 11002252.2
(22) Anmeldetag: 18.03.2011
(51) Int. Cl.: H02H 7/26

(54) **Elektrische Niederspannungsgebäudeinstallation**
Electric low voltage building installation
Installation de bâtiment à basse tension électrique

(30) Priorität: 11.04.2010 DE 102010014548
(43) Veröffentlichungstag der Anmeldung: 12.10.2011
(73) Patentinhaber: Woertz AG, 4132 Muttenz 1 (CH)
(72) Erfinder: Onodi, Tamas, CH-8800 Thalwil (CH); Ramirez, Alexandre, FR-68300 Saint-Louis Neuweg (FR)
(74) Vertreter: Samson & Partner Patentanwälte mbB

(56) Entgegenhaltungen:
- EP-A1- 0 807 999
- EP-A2- 0 665 608
- CN-Y- 2 919 635
- DE-A1- 10 013 105
- US-A1- 2003 123 209
- US-A1- 2007 213 879

## Beschreibung

Die Erfindung betrifft eine elektrische Niederspannungs-Gebäudeinstallation, bei der für Leitungsabzweigungen mit Querschnittsverringerung Überstrom-Schutzeinrichtungen vorgesehen sind.

Der übliche Aufbau einer Niederspannungs-Gebäudeinstallation ist beispielsweise in A. Hösl und R. Ayx, "Die neuzeitliche und vorschriftsmäßige Elektroinstallation", Heidelberg, 12. Aufl. 1996, auf den S. 56 - 59, 73 - 165 dargestellt. Demnach folgen nach der Übergabestelle des Elektroversorgungsunternehmens (sog. Hausanschlusskasten) zunächst eine oder mehrere Hauptleitungen, die nicht gemessene elektrische Energie führen. Diese sind grundsätzlich Drehstromleitungen und haben i.a. Leiterquerschnitte zwischen 10 mm² und 120 mm² Cu, und sind meist an der Übergabestelle entsprechend abgesichert. In der oder den Hauptleitungen befinden sich (bei Gebäuden mit mehreren Messeinrichtungen) Hauptleitungsabzweige in Hauptleitungsabzweigkästen, die zu den Messeinrichtungen (z.B. Stromzählern) führen. Auf den Stromzähler folgt häufig eine Drehstromleitung vom Zählerplatz zum sog. Stromkreisverteiler, die mindestens mit Leiterquerschnitt 10 mm² Cu auszulegen ist, und bei Installationen in Großbauten (Hochhäuser, Geschäfthäuser, etc) oft 16 mm² Cu beträgt. Im Stromkreisverteiler teilt sich diese Leitung in einzelne Stromkreise, die zu den Verbrauchern führen. Die Leitungen der einzelnen Stromkreise haben meist Leiterquerschnitte von 1,5 mm² oder 2,5 mm² Cu. Wegen der Querschnittsverringerung von 10/16 mm² Cu auf 1,5/2,5 mm² Cu sind die einzelnen Stromkreise gegen Überstrom mit Überstrom-Schutzeinrichtungen (Sicherungen oder Sicherungsschalter) abgesichert. Überstrom-Schutzeinrichtungen für jeden einzelnen Stromkreis. Die zu einem Stromzähler gehörenden Überstrom-Schutzeinrichtungen sind in der Regel in einem Schaltschrank zusammengefasst; dort findet auch die Verteilung von der vom Stromzähler kommenden 10/16 mm²-Leitung auf die einzelnen Stromkreise mit Hilfe von Stromschienen und darauf sitzenden Anschlussklemmen statt.

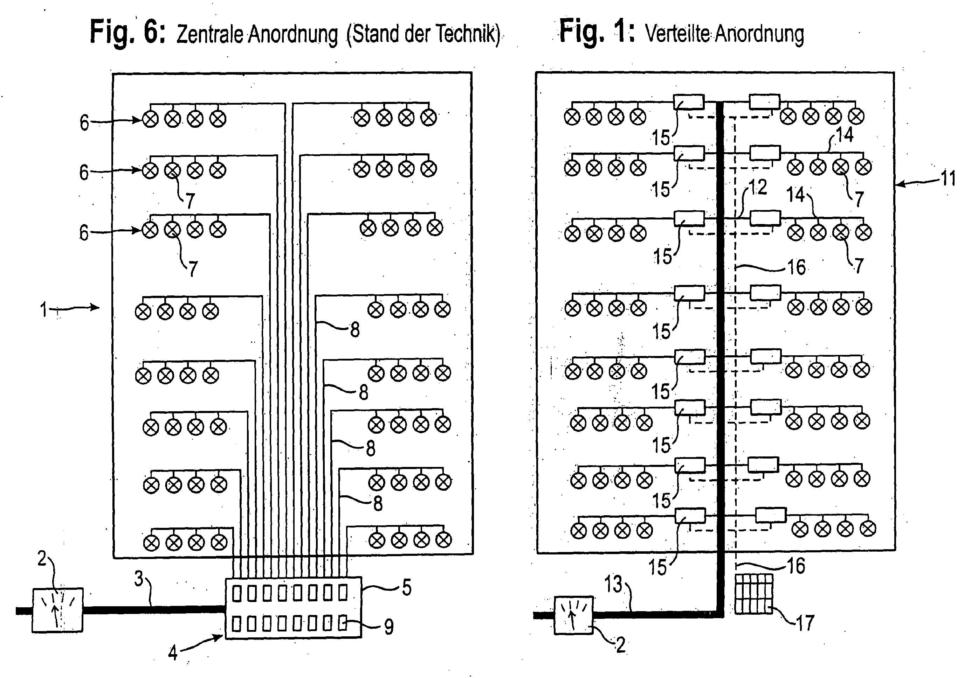

In Fig 6. ist eine derartige Niederspannungs-Gebäudeinstallation 1 des Standes der Technik schematisch dargestellt. Von einem Stromzähler 2 führt eine Leitung 3 mit großem Leiterquerschnitt zu einem Stromkreisverteiler 4 in Form eines Schaltschranks 5. Im Schaltschrank 5 teilt sich die Leitung 3 in eine Vielzahl von Stromkreisen 6 auf, die zu den Verbrauchern 7 führen. Die Leitungen 8 der einzelnen Stromkreise 6 haben kleinere Leiterquerschnitte. Am Anfang der Stromkreisleiter 8 im Schaltschrank 5 ist jeweils eine Überstrom-Schutzeinrichtung in Form eines Sicherungsautomaten 9 angeordnet.

US 2007/213879 A1 betrifft eine Gebäudeinstallation mit durchgehender Hauptleitung und Verbrauchern die an verschiedene Abzweigleitungen angeschlossen sind. Die Verbraucher sind dabei über Verbrauchssteuerungsgeräte an die Abzweigleitungen angeschlossen, die einen Verbraucher von der Leitung trennen, wenn dessen Stromverbrauch zu hoch ist.

CN 2919635 Y betrifft eine an eine Verteilerleitung angeschlossene Abzweigleitung deren Querschnitt gegenüber der Verteilerleitung verjüngt ist.

US 2003/123209 A1 betrifft Leitungstrenneinrichtungen, die über eine Fernsteuerung, vorzugsweise Mobilfunkgeräte, auslösbar sind.

EP 087999 A1 betrifft ein elektrisches Installationssystem mit einer Verteilerleitung und daran angeschlossene Abzweigleitungen, wobei die Abzweigleitungen jeweils über eine eigene Sicherung abgesichert sind. Die Verteilerleitung und die Abzweigleitung beinhalten sowohl Stromleitungen als auch Datenleitungen.

EP 0665608 A2 betrifft ein elektrisches Installationssystem mit einer Verteilerleitung die als Flachkabel ausgebildet ist, an welches Abzweigleitungen über eine Anschlussvorrichtung abisolierfrei anschließbar sind.

DE 10013105 A1 betrifft eine Mikroschalter-Ansteuerung, bei der ein Elektromotor einen Knebel entweder spannt oder absichtlich auslöst.

Die Erfindung ist in Patentanspruch 1 angegeben. Sie stellt demgegenüber eine elektrische Niederspannungs-Gebäudeinstallation der eingangs genannten Art bereit, bei der wenigstens eine Verteilerleitung vorgesehen ist, an der Leitungsabzweigungen zu Zweigleitungen mit gegenüber der Verteilerleitung verringertem Querschnitt verteilt im Gebäude angeordnet sind. Entsprechend sind auch die zugeordneten Überstrom-Schutzeinrichtungen verteilt an den Leitungsabzweigungen oder - den Leitungsabzweigungen nachgeordnet - in den Zweigleitungen angeordnet. Die verteilt angeordneten Überstrom-Schutzeinrichtungen sind nach Auslösung, d.h. Unterbrechung der Leitungsabzweigung oder Zweigleitung, ferngesteuert wieder einschaltbar (wobei unter Wiedereinschaltung einer Überstrom-Schutzeinrichtung das Wiedereinschalten (also Wiederdurchgängigmachen) der unterbrochenen Leitungsabzweigung bzw. Zweigleitung zu verstehen ist). Die Überstrom-Schutzeinrichtungen benötigen zum Unterbrechen ihrer jeweiligen Leitungsabzweigung bzw. Zweigleitung keine Fernsteuerungsfunktion, sondern führen das Unterbrechen lokal, d.h. aufgrund eigener Feststellung eines Überstroms herbei.

Anhand der angefügten Zeichnung werden fakultative Ausgestaltungen und beispielhafte Ausführungsformen der Erfindung beschrieben. In der Zeichnung zeigen:
Fig. 1 ein schematisches Schaltungsdiagramm einer Ausführungsform einer erfindungsgemäßen verteilten Niederspannungs-Gebäudeinstallation;
Fig. 2 ein detaillierteres Schaltungsdiagramm eines Ausschnitts von Fig. 2, nämlich einer Abzweigung mit Abzweigleitung, Überstrom-Schutzeinrichtung mit Fernsteuerung, und angeschlossenen Verbrauchern;
Fig. 3 eine perspektivische Darstellung der Installationselemente bei einer Ausführungsform einer Gebäudeinstallationsanlage gemäß dem Schaltungsdiagramm von Fig. 2;
Fig. 4 ein Schaltungsdiagramm entsprechend Fig. 2, jedoch von einer Ausführungsform mit drahtloser Übertragung der Fernsteuersignale;
Fig. 5 eine schaltungsdiagramm-artige Darstellung einer Ausführungsform mit ferngesteuerten Überstrom-Schutzeinrichtung, die eine Fehlerstrom-Schutzeinrichtung umfasst;
Fig. 6 ein schematisches Schaltungsdiagramm einer "zentralisierten" Niederspannungs-Gebäudeinstallation gemäß dem Stand der Technik.

Die Erfinder der vorliegenden Erfindung haben erkannt, dass bei der anhand von Fig. 6 veranschaulichten zentralisierten Anordnung der Verzweigungen und Sicherungsautomaten 9 des Standes der Technik in einem Schaltschrank die Stromkreisleiter 8 zu einem beträchtlichen Teil parallel verlaufen. Sie haben erkannt, dass dies nicht nur relativ aufwendig ist, sondern die Planung und Ausführung einer Gebäudeinstallation - und erst recht deren spätere Erweiterung - erschwert.

Erfindungsgemäß kann diese Parallelität vermieden werden, wie Fig. 1 veranschaulicht. Die dort dargestellte Niederspannungs-Gebäudeinstallation 11 mit verteilter Anordnung von Leitungsabzweigungen 12 hat keine derartige Parallelität. Vom Stromzähler 2 führt eine Verteilerleitung 13 größeren Querschnitts in der Nähe der verschiedenen Verbraucher 7. Die Verteilerleitung 13 entspricht hinsichtlich ihres Ursprungs und ihres Leiterquerschnitts also der Leitung 3, die herkömmlicherweise den Schaltschrank 4 mit dem Stromzähler 2 verbindet. Ein Schaltschrank ist jedoch nicht vorhanden, und die Verteilerleitung 13 erstreckt sich im Unterschied zu der herkömmlichen Leitung 3 weit in den zu versorgenden Bereich hinein. Die Leitungsabzweigungen 12 befinden sich in der Nähe der jeweiligen Verbraucher 7, und sind daher entlang der Verteilerleitung 13 verteilt angeordnet. An einer Leitungsabzweigungen 13 zweigt jeweils eine Zweigleitung 14 mit gegenüber der Verteilerleitung 13 verringertem Leiterquerschnitt von der Verteilerleitung 13 ab. Die Zweigleitungen 14 entsprechen also hinsichtlich ihrer Endpunkte und ihres Leiterquerschnitts den Stromkreisleitern 8, die herkömmlicherweise in einem Schaltschrank 4 aus einer Aufteilung des Leiters 3 entspringen. Ein Schaltschrank ist jedoch nicht vorhanden, und die Zweigleitungen 14 entspringen jeweils in der Nähe der von ihnen versorgten Verbraucher 7, verlaufen also nicht parallel zueinander und erstrecken sich im nur eine jeweils relativ kurzes Stück von der vorbeilaufenden Verteilerleitung 13 zu den jeweils versorgten Verbrauchern 7.

Entsprechend sind erfindungsgemäß auch die zugeordneten ferngesteuerten Überstrom-Schutzeinrichtungen 15 verteilt angeordnet. Bei manchen Ausführungsformen sind sie unmittelbar an den Leitungsabzweigungen 12 angeordnet. Bei anderen Ausführungsformen sind die Überstrom-Schutzeinrichtungen 15 hingegen in der Zweigleitung (nach den Leitungsabzweigungen 12) angeordnet. Wenn das nicht abgesicherte Stück Zweigleitung 14 relativ kurz ist (z.B. nicht länger als z.B. 20-30 cm), ist die Anordnung der Überstrom-Schutzeinrichtung 15 nicht direkt an der Leitungsabzweigung 12, sondern erst in der Zweigleitung 14 akzeptabel. Denn der Widerstand des nicht abgesicherten Stücks der Zweigleitung 14 ist dann noch so klein, dass bei einem Kurzschluss in dem nicht abgesicherten Stück Zweigleitung 14 die vorgelagerte Sicherung der Verteilerleitung 13 abschalten wird.

Die verteilt angeordneten Überstrom-Schutzeinrichtungen sind nach Auslösung, d.h. Unterbrechung der Leitungsabzweigung 12 bzw. Zweigleitung 14 ferngesteuert wieder einschaltbar, wobei die Fernsteuerungssignalisierung in Fig. 1 durch Linien 16 veranschaulicht ist, die zwischen einer Schaltzentrale 17 und den einzelnen verteilten Überstrom-Schutzeinrichtungen 15 erfolgt.

Die Überstrom-Schutzeinrichtungen 15 benötigen zum Unterbrechen ihrer jeweiligen Leitungsabzweigung 12 bzw. Zweigleitung 14 keine Fernsteuerungsfunktion, sondern führen das Unterbrechen lokal, d.h. aufgrund eigener Feststellung eines Überstroms herbei. Auch bei einem Ausfall oder einer Funktionseinschränkung der Fernsteuerung ist somit sichergestellt, dass z.B. bei einem Kurzschluss in einer Zweigleitung 14 die dieser zugeordneten Überstrom-Schutzeinrichtung 15 die Zweigleitung 14 von der Verteilerleitung 13 trennt und somit den Kurzschluss-Stromfluss beendet. Nur die Wiedereinschaltung wäre von einem Ausfall der Fernsteuerung betroffen.

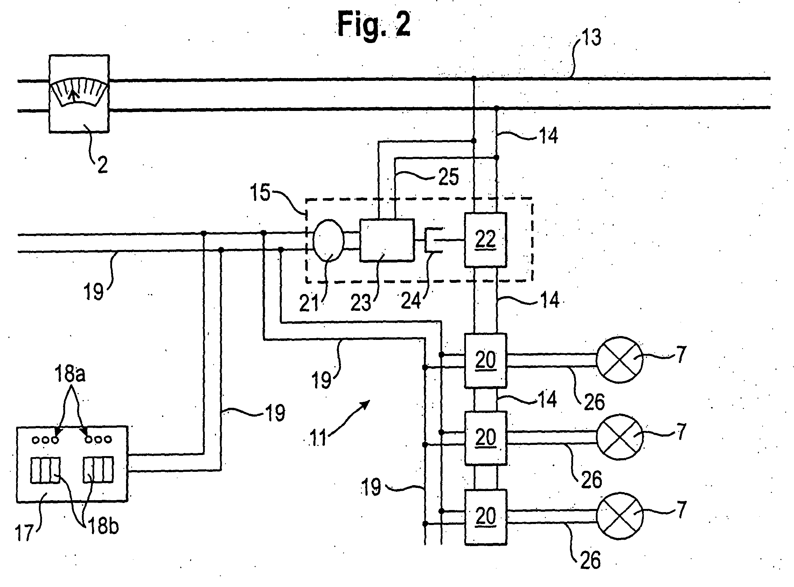

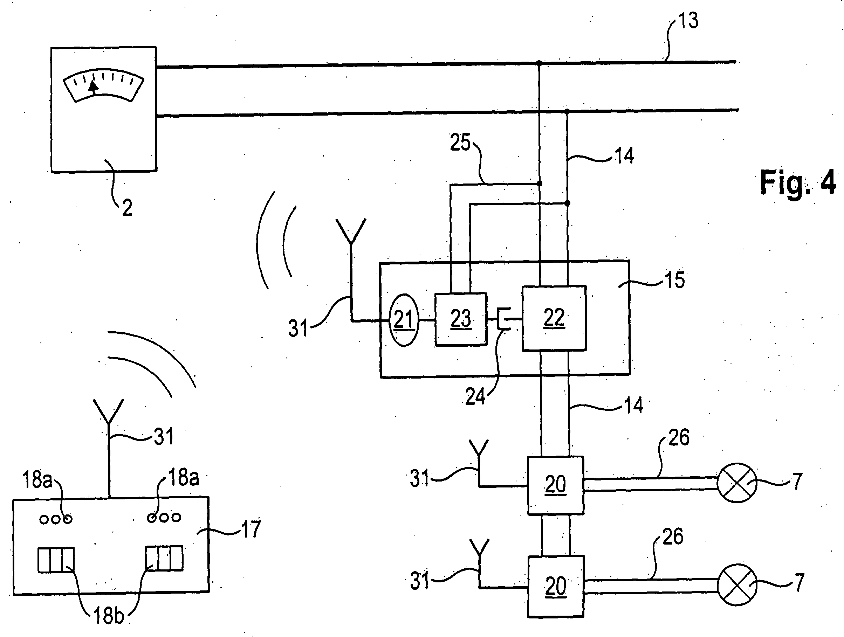

Die elektrische Niederspannungs-Gebäudeinstallation bezieht sich also, wie neben der Fig. 1 auch die Fig. 2 und 4 veranschaulichen, auf die Leitungsinstallation dem Stromzähler 2. Bei dem möglichen Sonderfall einer Anlage mit mehreren nacheinander geschalteten Stromzählern bezieht sie sich auf die Leitungsinstallation nach dem letzten Stromzähler vor den Verbrauchern 7.

Die verteilt angeordneten Überstrom-Schutzeinrichtungen 15 sind nicht in einem Verteilerschrank 5 angeordnet sind, sondern sind verteilt entlang der Verteilerleitung 13 angeordnet, die in die Nähe der Verbraucher 7 an diesen vorbeigeführt ist.

Wie Fig. 1 veranschaulicht, sind die Leitungsabzweigungen 12 und die zugeordneten Überstrom-Schutzeinrichtungen 15 so entlang der Verteilerleitung 13 verteilt sind, dass sich für die Verteilerleitung 13 und Zweigleitungen 14 eine minimale Gesamt-Leitungslänge ergibt.

Vorzugsweise sind die verteilt angeordneten Überstrom-Schutzeinrichtungen 15 in Hohldecken, Hohlböden, Hohlwänden, Kabelkanälen und/oder Unterputzdosen untergebracht sind.

Einzelheiten der Fernsteuerung der Überstrom-Schutzeinrichtungen 15 werden nun anhand der Fig. 2, 3 und 4 näher beschrieben.

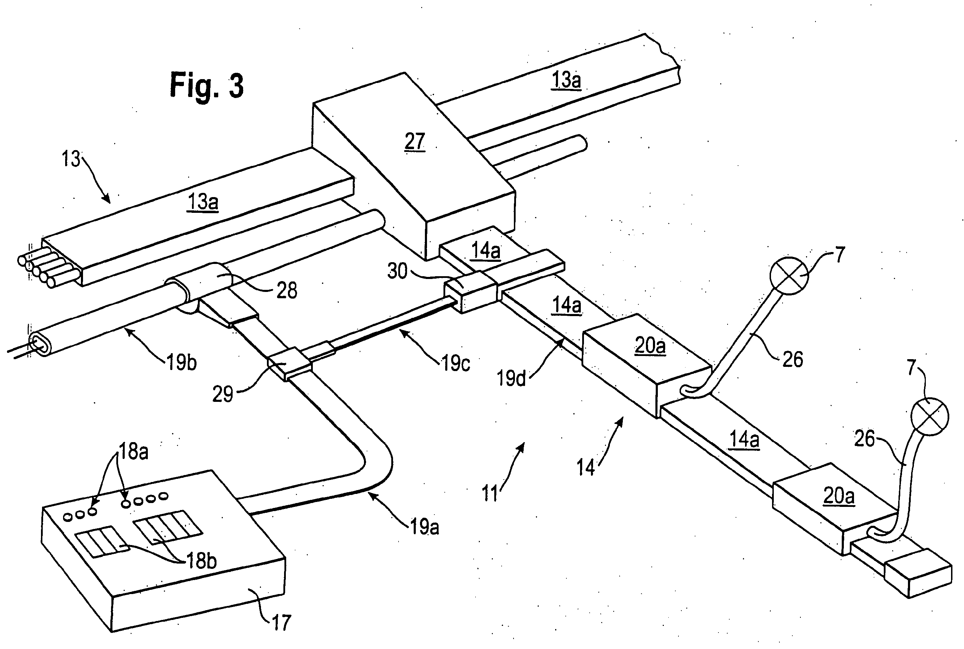

Zum zentralen Steuern, d.h. insbesondere zum Wiedereinschalten der verteilten Überstrom-Schutzeinrichtungen 15 dient die Schaltzentrale 6, die in den Figuren 2 und 3 auch als "Steuerzentrale" bezeichnet ist. Vorzugsweise sind die die verteilt angeordneten Überstrom-Schutzeinrichtungen 15 dazu eingerichtet sind, ihren aktuellen Schaltzustand an die Schaltzentrale 6 zu übermitteln wird. Die Schaltzentrale 17 weist hierfür eine Benutzerschnittstelle zur zentralen Befehlseingabe für die Fernsteuerung der verteilten Überstrom-Schutzeinrichtungen 15 auf, z.B. in Form eines Tastenfelds 18 a mit Tastensensoren. Gegebenenfalls kann sie auch eine Benutzerschnittstelle zur Visualisierung des Zustands der verteilten Überstrom-Schutzeinrichtungen 15 aufweisen, z.B. eine Anzeige 18b in Form eines Bildschirms oder einer LED-Anzeige.

Die Signale zur Fernsteuerung der Überstrom-Schutzeinrichtungen 15 und ggf. zum Rückmelden ihres Schaltzustands werden bei den Ausführungsformen der Fig. 2 und 3 über ein Datenkabel zu und von den Überstrom-Schutzeinrichtungen 15 übertragen (eine andere Ausführungsform mit drahtloser Signalübertragung wird weiter unten anhand Fig. 4 erläutert). Grundsätzlich wäre es möglich, eine Datenverkabelung vorzusehen, bei der jeder zu steuernde Überstrom-Schutzeinrichtung 15 mit einer eigenen Datenleitung mit der Schaltzentrale 17 verbunden ist, so dass die Adressierung der einzelnen Überstrom-Schutzeinrichtungen 15 allein über die Wahl der betreffenden Datenleitung erfolgen könnte. Bei der in den in den Fig. 2 und 3 dargestellten Ausführungsformen ist hierfür jedoch ein Datenbus 19 vorgesehen, mit dem die Schaltzentrale 17 und die verschiedenen Überstrom-Schutzeinrichtungen 15 verbunden sind. In den Ausführungsformen der Fig. 2 und 3 dient der Datenbus 19 nicht nur zur Kommunikation mit den Sicherungsautomaten, sondern auch mit Aktoren 20 für die Verbraucher 7. Die Aktoren 20 sind beispielsweise ferngesteuerte Ein- und Ausschalter, Dimmer, Klimaregler, die der Laststeuerung, Beleuchtungssteuerung, Sonnenschutzsteuerung, Klimatisierung, Notfall-Gerätesteuerung etc. dienen können. Die Verbraucher 7 sind z.B. über Stichleitungen 26 und die Aktoren 20 mit der Zweigleitung 14 elektrisch verbunden. Mit Sensoren gewonnene Daten können auch in der anderen Richtung über den Datenbus 19 fließen. Der Datenbus 19 beruht zum Beispiel auf einem der in der Gebäudeinstallation eingeführten Datenbusstandards KNX, LON, CAN, usw. Die Überstrom-Schutzeinrichtungen 15 sind mit Buskopplern 21 an den Datenbus 19 gekoppelt. Entsprechendes gilt für die Schaltzentrale 17 und die Aktoren 20. Die Adressierung der einzelnen Buselemente (Schaltzentrale 17, Überstrom-Schutzeinrichtungen 15, Aktoren 20) erfolgt durch die Angabe der Adressen der Buselemente in den auf den Bus gegebenen Dateneinheiten (in der Gebäudeinstallations-Bussystemen oft "Telegramme" genannt). Die Signale zur Fernsteuerung der Überstrom-Schutzeinrichtungen 15 und ggf. zum Rückmelden ihres Schaltzustands werden z.B. in Form solcher Telegramme über den Datenbus 19 zu und von den Überstrom-Schutzeinrichtungen 15 übertragen werden. Die Schaltzentrale 17 ist also an den Datenbus 19 gekoppelt und kommuniziert mittels der Telegramme mit den Überstrom-Schutzeinrichtungen 15.

Bei den Ausführungsformen der Fig. 2 und 3 verläuft der Datenbus 19 parallel zu der Verteilerleitung 13, zwecks Kopplung mit den Überstrom-Schutzeinrichtungen 15, die verteilt entlang der Verteilerleitung 13 angeordnet sind. Da die Schaltzentrale 17 jedoch nicht in der Nähe der Verteilerleitung 13 zu liegen braucht, wird der zur Schaltzentrale 17 führende Datenbus-Abschnitt i.a. nicht parallel zur Verteilerleitung 13 verlaufen.

Die Überstrom-Schutzeinrichtungen 15 weisen bei den Ausführungsformen der Fig. 2-5 jeweils einen Sicherungsautomaten 22 und einen elektrischen Antrieb 23 zu deren ferngesteuerten Wiedereinschaltung auf. Die Sicherungsautomaten 22 sind dazu eingerichtet, einen Überstrom in der ihnen zugeordneten Zweigleitung 14 zu detektieren und bei Feststellung eines Überstroms die ihnen zugeordnete Zweigleitung 14 unter Last zu trennen. Sie benötigen dazu kein Steuersignal vom Datenbus 19 o.ä., und auch keine externe Hilfsenergie; vielmehr haben sie die zur Trennung nötige Energie selbst gespeichert, z.B. in Form von elastischer Verformungsenergie in einer bei durchgehend geschalteter Leitung gespannten Feder, die zum Trennen der Leitung 14 entspannt wird.

Der elektrische Antrieb 23 ist dazu eingerichtet, den ihm zugeordneten aus dem ausgelösten Zustand (bei dem die Zweigleitung 14 getrennt ist) wieder in den eingeschalteten Zustand (bei dem die Zweigleitung 14 wieder durchgeschaltet ist) zu bringen, und zwar ferngesteuert durch Ansteuerung über den Buskoppler 21 aus dem Datenbus 19. Der mechanische Antrieb 23 ist hierzu über einen Mechanikkoppler 24 mit dem Sicherungsautomaten 22 verbunden. Neben der eigentlichen Einschaltbewegung bringt er mit Hilfe des Mechanikkopplers 24 hierbei auch die vom Sicherungsautomaten 22 für dessen Trennbereitschaft zu speichernde Energie mechanisch in diesen ein, z.B. indem er die besagte Feder wieder spannt. Er erhält hierzu Fremdenergie. Bei den anhand der Fig. 2-4 veranschaulichten Ausführungsformen ist der elektrische Antrieb 23 über eine Verbindungsleitung 25 mit der Verteilerleitung 13 oder der Zweigleitung 14 oberhalb der Trennstelle des Sicherungsautomaten 22 verbunden, und erhält so seine Fremdenergie aus dem Starkstromnetz. Bei anderen Ausführungsformen erfolgt die Stromversorgung des elektrischen Antriebs 23 jedoch aus dem Datenbus 19; die Verbindungsleitung 25 entfällt dann. Die Stromversorgung aus dem Datenbus 19 kann beispielsweise durch eine Klein-Gleichspannung (z.B. 15 V) erfolgen, die dem Datenbus 19 aufgeprägt ist. Eine derartige aufgeprägte Klein-Gleichspannung dient auch als Speisespannung für Buselektronik (d.h. für die der Buskoppler 21) und ggf. zur Speisung von Sensoren und Aktoren 20 und mit dem Bus 19 gekoppelten Sensoren.

Bei manchen Ausführungsformen ist der Sicherungsautomat 22 ein für manuelle, nicht aber ferngesteuerte Wiedereinschaltung ausgelegten Sicherungsautomat, wie er üblicherweise in Stromkreisverteilern bei herkömmlichen zentralisierten Gebäudeinstallationen nach Art von Fig. 6 eingesetzt wird. Der elektrische Antrieb 23 und der Mechanikkoppler 24 sind ein gesondertes Modul und sind so ausgebildet und an den Sicherungsautomaten 22 gekoppelt, dass sie an einem für die manuelle Einschaltung vorgesehenen Stellglied eine Einschaltbewegung ausführen, welche einer manuellen Einschaltbewegung entspricht. Außerdem weist die Überstrom-Schutzeinrichtung 15 noch eine Rückmeldefunktion auf: Der aktuelle Zustand des Sicherungsautomaten (also ob er ausgelöst oder eingeschaltet ist) wird über den Buskoppler 21 und den Datenbus 19 als Telegramm zur Schaltzentrale 17 geleitet und dort ggf. auf der Anzeige 18b angezeigt. Als Geber für den aktuellen Zustand dienen z.B. Hilfskontakte des Sicherungsautomaten 22.

Fig. 3 veranschaulicht eine Ausführung der verschiedenen Leitungen 13, 14 und 19 und Installationselemente bei einer Ausführungsform der Gebäudeinstallation 11 gemäß dem Schaltungsdiagramm von Fig. 2. Die Verteilerleitung 13 ist durch ein Flachkabel 13a mit parallel in einer Ebene geführten Starkstromadern gebildet. Ein Flachkabel dieses Typs ist beispielsweise in der DE-AS 2 206 187 beschrieben. Das Flachkabel 13a ist in der Regel dreiphasig, und hat somit fünf (oder vier) Adern z.B. mit einem Leiterquerschnitt von 10 mm² oder 16 mm² Cu. Die Zweigleitung 14 ist durch ein Hybrid-Flachkabel 14a gebildet, das parallel in einer Ebene geführte Starkstromadern und Datenadern aufweist. Ein Hybrid-Flachkabel dieses Typs ist beispielsweise in der EP 0 665 608 A2 beschrieben. Bei der Zweigleitung 14 handelt es sich beispielsweise um eine einphasige Leitung. Das Hybrid-Flachkabel 14a hat somit drei (oder zwei) Starkstromadern z.B. mit einem Leiterquerschnitt von 2,5 mm². Daneben hat das Hybrid-Flachkabel zwei gemeinsam abgeschirmte, unverdrillt nebeneinander laufende Datenadern, die eine symmetrische Datenleitung bilden und ähnlich wie die Starkstromadern der Flachkabel 13a, 14a abisolierfrei und auftrennungsfrei an jeder beliebigen Längsposition des Flachkabels 4 durch Anzapfung kontaktiert werden können. Diese Datenleitung bildet den zu den parallel zu der Abzweigleitung 14 verlaufenden Abschnitt 19d des Datenbusses 19. Die übrigen Abschnitte des Datenbusses werden durch separat verlaufende Datenkabel gebildet, die zur Ermöglichung einer Anzapfkontaktierung vorzugsweise ebenfalls als gemeinsam abgeschirmt sind und unverdrillt nebeneinander in einer Ebene laufen, ähnlich dem Datenleitungsabschnitt 19d, der Teil des Hybrid-Flachkabels 14a ist. Diese übrigen Abschnitte verlaufen parallel zum Flachkabel 13a (Abschnitt 19b), von der Steuerzentrale 17 Verteilerleitungs-Flachkabel 13a (Abschnitt 19a) und vom Abschnitt 19a zum Zweigleitungs-Hybridflachkabel 14a (Abschnitt 19c). Die Stichleitungen 26 sind z.B. Rundkabel oder Flachkabel.

Bei der Ausführungsform von Fig. 3 sind für sämtliche Kabel- und Busverbindungen Abzweigdosen vorgesehen, die auf einem der Kabel bzw. Busse sitzen und dessen durchgehende Leiter abisolierfrei kontaktieren. Auf dem Verteilerleitungs-Flachkabel 13a und dem parallel geführten Busabschnitt 19b sitzt eine Anschlussdose 27, die eine Phase des Verteilerleitungs-Flachkabels 13a und den Datenbus 19 kontaktiert und in der die Überstrom-Sicherungseinrichtung 15 (ggf. einschließlich der Verbindungsleitung 25 zur Versorgung des elektrischen Antriebs 23) integriert ist. Aus der Anschlussdose 27 ist das Zweigleitungs-Hybridflachkabel 14a herausgeführt. Eine Busleitungs-Anschlussdose 28 sitzt auf dem Busleitungsabschnitt 19b und kontaktiert diesen; aus ihr ist der Busleitungsabschnitt 19a zur Schaltzentrale 17 herausgeführt. Eine weitere Busleitungs-Anschlussdose 29 sitzt auf dem Busleitungsabschnitt 19a und kontaktiert diesen; aus ihr ist der Busleitungsabschnitt 19c zum Zweigleitungs-Hybridflachkabel 14a herausgeführt. Eine Busleitungs-Anschlussdose 30 sitzt auf dem im Hybridflachkabel 14a integrierten Busleitungsabschnitt 19d und kontaktiert diesen. Auf dem Hybridflachkabel 14a sitzen ein oder mehrere abisolierfrei mit den Starkstromadern und dem Busleitungsabschnitt 19d kontaktierte Aktoren 20a, aus denen die Stichleitungen 26 herausgeführt sind.

Fig. 4 veranschaulicht eine Ausführungsvariante, bei der die Steuerung des Überstrom-Schutzeinrichtung 15 durch die Schaltzentrale 6, der Rückmeldung von jener an diese, und ggf. die Steuerung der Aktoren 20 drahtlos, z.B. per Funk oder Infrarot erfolgt. Hierfür sind an der Überstrom-Schutzeinrichtung 15, der Schaltzentrale 6, und ggf. den Aktoren 20 Funkantennen 31 und geeignete Funksender bzw. - empfänger vorgesehen (bzw. Infrarotsender und -empfänger). Im Übrigen gelten hier die zu den Fig. 1-3 gemachten Ausführungen.

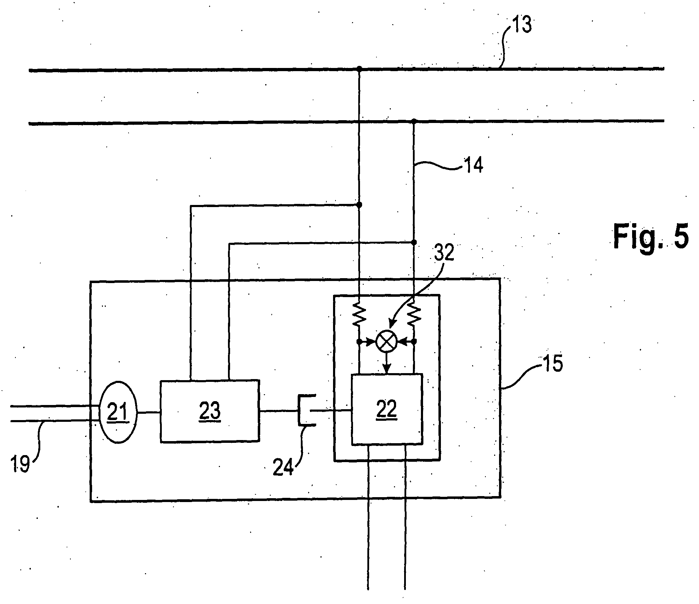

Bei manchen Ausführungsformen ist die Überstrom-Schutzeinrichtung 15 nicht nur durch auslösbar und ferngesteuert wieder einschaltbar, sondern kann auch ferngesteuert von der Schaltzentrale 17 ausgeschaltet werden. Hiermit ist es möglich, Zweigleitungen 14 bei Bedarf vom Netz trennen zu können. Dies ist in Fig. 5 veranschaulicht, indem beim Buseingang in die Überstrom-Schutzeinrichtung 15 "Befehl Ein-Aus" eingetragen ist.

Fig. 5 veranschaulicht, dass die Überstrom-Schutzeinrichtung 15 neben der Überstromsicherung auch für eine Leitungstrennung bei Auftreten eines Fehlerstroms in der Zweigleitung 14 sorgt. Hierzu dient ein FI-Schalter 32, der den Strom auf den beiden stromführenden Leitern der Zweigleitung 14 vergleicht und, wenn die Differenz der beiden Ströme einen gewissen Höchstwert überschreitet, den Sicherungsautomaten 22 auslöst. Dies geschieht - wie oben beschrieben - ohne Fremdenergie. Für die Wiedereinschaltung des Sicherungsautomaten 22 durch den elektrischen Antrieb 23 und den Mechanikkoppler 24, die Speisung des elektrischen Antriebs 23 etc. gilt das oben im Zusammenhang mit den Fig. 1-5 Gesagte. Der gemessene Differenzstrom kann zudem der Schaltzentrale laufend rückgemeldet werden.

Die Erfindung steht im Kontext der Gebäudeautomation mit Bus - Systemen. Gebäudeautomation mit Bus - Systemen erlaubt im Prinzip die Verkabelung eines Gebäudes ohne zentral angeordneten Schaltschrank. Es können grosse Systeme mit verteilter Intelligenz aufgebaut und jederzeit weiter ergänzt werden. Grosser Vorteil ist die einfachere kostengünstigere Verkabelung, die Aktoren sitzen nicht in einer Zentrale wovon alle Verbraucher gesteuert werden (mit separater Kabelführung) sondern direkt in der Nähe der Verbraucher platziert werden können. An eine Kabelschlaufe können alle Aktoren und Verbraucher angehängt werden. Wenn dieses Potential überlegt genutzt wird, kann erheblich gespart werden und auch für die Erweiterung des Systems stehen günstige Lösungswege frei. Diese Grundidee der Bussysteme wird aber erheblich gestört durch die Anordnung der Schutzvorrichtungen im Stand der Technik. Überstrom und Kurzschluss werden selektiv abgesichert, dort wo sich der Leiterquerschnitt (die Strombelastbarkeit) ändert. Die Sicherungen oder Sicherungsautomaten (Überstromrelais) müssen nach dem Stand der Technik wegen der Bedienung gut erreichbar werden, so platziert man diese wiederum in einen Schaltschrank, wovon die einzelnen Stromkreise abgezweigt werden. Aus dieser Notwendigkeit ergibt sich wieder ein zentrales System. Die Vorteile der Verteilten Intelligenz können im Stand der Technik daher nur bei unveränderten Querschnitt und Belastbarkeit - folglich begrenzt - genutzt werden.

Die Erfindung beseitigt diese Nachteile und lässt die Vorteile der vollkommen verteilten Intelligenz zur Geltung kommen, ohne die Beeinträchtigung der ursprünglichen Sicherheitsfunktionen.

Die Idee ist, die Überstrom -Relais auf das Kabel, auf die Knotenpunkte (Abzweigung mit verändertem Querschnitt) setzen und die Betätigung per Fernbedienung steuern. Diese erfolgt als Telegramm (Befehl) über das Datenkabel (Bus). Die einzelne Schutzvorrichtungen, Sicherungsautomaten können über die Busleitung unter eigener Adresse erreicht werden.

Der Aufbau dieses System beinhaltet beispielsweise folgende Elemente:
- Tastensensor für die Befehlseingabe (Ein- Ausschalten, Prüfen)
- Visualisierung der Zustand von Sicherungsautomaten (LED oder andere)
- Buskoppler (je nach Bus-System z.B.: KNX, LON, CAN....)
- Datenkabel
- Geräteseitige Buskoppler
- Mechanische Betätigung (Relais, Schrittmotor,...)mit mechanischer Ankopplung
- Sicherungsautomat (Handelsübliche, beliebige , mit Hilfskontakte zur Zustandserfassung)

Das Ein und Ausschalten geschieht z.B. über den Tastensensor der über Buskoppler auf das Datenkabel angeschlossen wird und die Schaltbefehle als Telegramme auf die programmierte Adresse sendet. Das Telegramm löst in der mechanischen Betätigungseinheit die Bewegung für das direkte Schalten der Sicherungsautomat aus. Das Ein- und Ausschalten erfolgt somit per Tastendruck. Der aktuelle Zustand wird wiederum von den Hilfskontakten der Sicherungsautomaten über das Datenkabel als Telegramm auf die Visualisierung geleitet.

Wenn in dem geschützten Stromkreis ein Kurzschluss oder unerlaubte Überbelastung entsteht so wird der Sicherungsautomat den Kreis unverzüglich direkt abschalten und den Zustand als Telegramm auf die Visualisierung schicken.

Beim Wiedereinschalten geht das Befehl von dem Tastensensor über Koppler und Datenkabel auf die Betätigungseinheit und die Mechanik startet den Versuch wieder einzuschalten. Sollte der Kurzschluss (Überlast) weiterhin bestehen, so bleibt der Versuch erfolglos, das Schutzrelais löst, unabhängig von der Betätigungsmechanik, erneut aus. Die Zustandsanzeige zeigt "AUS", weil diese von den Hilfskontakten gesteuert wird.

Als zentrale Einheit bleiben nur die Tastensensoren mit der Visualisierung, die durch einen Buskoppler mit dem Datenkabel verbunden werden. Diese Einheit braucht nur eine Datenkabelzuführung und keine weitere Verkabelung. Die Energieverteilung ist von der Steuer und Überwachungseinheit komplett abgelöst, die Verkabelung kann dezentral und sehr ökonomisch erfolgen. Die Einheit ist, - wie das Gesamtsystem - jederzeit erweiterbar und sogar ohne weiteren Verkabelungsaufwand.

Der Sicherungsautomat kann immer an die Abzweigung platziert werden. (Neue Abzweigungen sind jederzeit möglich).

Das System (mit entsprechendem Hardware und Software Anpassungen) kann bei allen Bussystemen (KNX, LON, CAN,...) verwendet werden.

Das System kann mit beliebigen, handelsüblichen Sicherungsautomaten und Sensoren sowie Visualisierung (LED-s oder Bildschirm) bestückt werden. (eventuell ist eine Anpassung sinnvoll zwischen mechanischen Betätigungseinheit und Sicherungsautomat). In diesem Fall können für die sicherheitsrelevanten Elemente bereits erprobte und zugelassene Geräte ausgewählt werden.

Die Erfindung ist mit Sicherungsautomaten mit FI (Fehlerstromschutz - Schalter) ausgestattet. In diesem Fall wird die Abzweigung nicht nur bei Überlast, sondern auch bei unerlaubter Leckstromgrösse ausgeschaltet werden.

Diese Variante kann zusätzlich visualisiert werden (entsprechende Programmierung, zusätzlicher LED). Für die periodische Überprüfung des FI Schalters kann eine zusätzliche Sensortaste verwendet werden.

Für die Sicherheit des Personals bei Instandhaltung oder Fehlersuche kann die Zentrale Steuereinheit mit zusätzlichem Schlüsselschalter ausgerüstet werden. Durch drehen und Ausziehen des Schlüssels wird ein Wiedereinschalten durch Tastendruck blockiert(Software), das System kann nicht versehentlich eingeschaltet werden.

Bei einer weiteren Ausführungsart werden Schutzrelais, mechanische Betätigung und Buskoppler in dem gleichen Gehäuse platziert werden. Dadurch kann die Baugrösse erheblich reduziert werden.

Eine weitere Möglichkeit über Bus - System, ferngesteuert den Auslösestrom und die Auslöse-/ Verzögerungszeiten individuell programmiert einzustellen.

Je nach Geräteart kann die Parametrierung der Sicherungsautomaten über Software vorgenommen werden.

Eine spezielle weitere Ausführungsvariante ist die Datenübertragung über InfrarotStrahlen, ohne Datenkabelverbindung. In diesem Fall sind aber die Sender und Empfänger - zusätzliche Aufbauelemente - entsprechend zu platzieren. (Freie Sicht)

Es besteht die Möglichkeit für die Datenübertragung zwischen Steuereinheit und Sicherungsautomaten per Funk. Die entsprechende Sender und Empfänger stehen für die meisten Bussysteme bereits zur Verfügung. Die Reichweite beträgt, je nach Bauweise bis zu 100 m und es dürfen sogar Wände zwischen diesen Elementen stehen.

### Figurenbeschriftung

**Figurenseite 1/5**
   **Fig. 1****: Verteilte Anordnung**
      - 2: Stromzähler
      - 13: Energieversorgung
      - 17: Steuerung und Überwachung
   **Fig. 6****: Zentrale Anordnung (Stand d. T.)**
      - 2: Stromzähler
      - 3: Energieversorgung
      - 9: Sicherungsautomaten
**Figurenseite 2/5**
   **Fig. 2**
      - 2: Stromzähler
      - 7: Verbraucher
      - 13: Verteilerleitung, z.B. 16 mm² (10mm²)
      - 14: 2,5 mm² (Stromleitung)
      - 15: Überstromschutzeinrichtung
      - 17: Steuerzentrale
      - 19: Datenleitung
      - 20: Aktoren
      - 21: Buskoppler
      - 22: Sicherungsautomat
      - 23: elektrischer Antrieb
      - 25: Stromversorgung für mech. Betätigung
**Figurenseite 3/5**
   **Fig. 3**
      - 7: Verbraucher
      - 13a: 5(3) x 16 mm²
      - 14a: 3 x 2,5 mm² + Bus
      - 17: Steuerzentrale (Busankopplung, Tastensensoren, Visualisierung)
      - 19b: Busleitung
      - 20a: Abisolierfrei kontaktierte Aktoren
      - 27: Überstrom Sicherungsschutz mit Bus Zusatzsteuerung
      - 28: Bus Anschluss
      - 29: Bus Anschluss
      - 30: Bus Anschluss
**Figurenseite 4/5**
   **Fig. 4****: Steuerung mit Funk**
      - 2: Stromzähler
      - 13: 16(10) mm² Stromleitung
**Figurenseite 5/5**
   **Fig. 5****: Überstrom Schutzschalter mit FI Schalter kombiniert**
      - 15: Überstrom Schutzschalter
      - 19: Befehl Ein - Aus Stromdiff. Überprüfung
      - 32: FI Schalter Kombination

## Patentansprüche

1. Elektrische Niederspannungs-Gebäudeinstallation, bei der wenigstens eine Verteilerleitung (13) und Überstrom-Schutzeinrichtungen (15) für Leitungsabzweigungen (12) zu Zweigleitungen (14) vorgesehen sind, wobei die Leitungsabzweigungen (12) verteilt im Gebäude angeordnet sind,
wobei entsprechend die zugeordneten Überstrom-Schutzeinrichtungen (15) verteilt an den Leitungsabzweigungen (12) angeordnet sind, und
die verteilt angeordneten Überstrom-Schutzeinrichtungen (15) nach Auslösung ferngesteuert wieder einschaltbar sind,
wobei die Überstrom-Schutzeinrichtungen (15) zum Unterbrechen ihrer jeweiligen Zweigleitung (14) keine Fernsteuerungsfunktion benötigen, sondern das Unterbrechen lokal, d.h. aufgrund eigener Feststellung eines Überstroms herbeiführen,
**dadurch gekennzeichnet, dass**
die Zweigleitungen (14) einen gegenüber der Verteilerleitung (13) verringerten Querschnitt aufweisen,
die Überstrom-Schutzeinrichtungen (15) unmittelbar an den Leitungsabzweigungen (12) von der Verteilerleitung (13) angeordnet sind, und
die wenigstens eine Verteilerleitung (13) durch ein Flachkabel (13a) mit parallel in einer Ebene geführten Adern gebildet wird,
die Zweigleitungen (14) durch auf dem Flachkabel sitzende Abzweigdosen (27) mit abisolierfreier Kontaktierung der Verteilerleitung (13) an die Verteilerleitung (13) angeschlossen sind, und
die Überstrom-Schutzeinrichtungen (15) in die auf dem Flachkabel (13a) sitzenden Abzweigdosen (27) integriert sind, und
die Überstrom-Schutzeinrichtungen (15) auch als Fehlerstrom-Schutzschalter (32) ausgebildet sind zum Abschalten der jeweiligen Zweigleitung (14) nicht nur bei Überlast, sondern auch bei unerlaubter Leckstrom- bzw. Fehlerstromgrösse, wobei auch die für die Fehlerstrom-Schutzschaltfunktion zum Unterbrechen der jeweiligen Zweigleitung (14) keine Fernsteuerungsfunktion benötigt wird, sondern das Unterbrechen der Zweigleitung (14) aufgrund Fehlerstroms lokal, d.h. aufgrund eigener Feststellung eines Fehlerstroms durch die betreffende Überstrom-Schutzeinrichtungen (15) herbeigeführt wird.

2. Elektrische Niederspannungs-Gebäudeinstallation nach Anspruch 1, bei der sich die verteilte Anordnung der Leitungsabzweigungen (12) und zugeordneten Überstrom-Schutzeinrichtungen (15) auf die Leitungsinstallation nach einem Stromzähler (2) bzw. - bei mehreren nacheinander geschalteten Stromzählern - nach dem letzten Stromzähler (2) bezieht.

3. Elektrische Niederspannungs-Gebäudeinstallation nach Anspruch 1 oder 2, bei der die verteilt angeordneten Überstrom-Schutzeinrichtungen (15) nicht in einem Verteilerschrank angeordnet sind, sondern entlang der wenigstens einen Verteilerleitung (13) angeordnet sind, die in die Nähe von Verbrauchern (7) der Gebäudeinstallation geführt ist.

4. Elektrische Niederspannungs-Gebäudeinstallation nach Anspruch 3, bei der die Leitungsabzweigungen (12) mit Querschnittsverringerung und die zugeordneten Überstrom-Schutzeinrichtungen (15) so entlang der Verteilerleitung (13) verteilt sind, dass sich für die Verteilerleitung (13) und die Zweigleitungen (14) eine minimale Leitungslänge ergibt.

5. Elektrische Niederspannungs-Gebäudeinstallation nach einem der Ansprüche 1 bis 4, bei der die verteilt angeordneten Überstrom-Schutzeinrichtungen (15) in Hohldecken, Hohlböden, Hohlwänden, Kabelkanälen und/oder Unterputzdosen untergebracht sind.

6. Elektrische Niederspannungs-Gebäudeinstallation nach einem der Ansprüche 1 bis 5, bei der die Überstrom-Schutzeinrichtungen (15) von einer Schaltzentrale (17) gesteuert werden.

7. Elektrische Niederspannungs-Gebäudeinstallation nach einem der Ansprüche 1 bis 6, bei der die verteilt angeordneten Überstrom-Schutzeinrichtungen (15) dazu eingerichtet sind, ihren aktuellen Schaltzustand einer Schaltzentrale (17) zu übermitteln.

8. Elektrische Niederspannungs-Gebäudeinstallation nach einem der Ansprüche 1 bis 7, bei der die Signale zur Fernsteuerung der Überstrom-Schutzeinrichtungen (15) und ggf. zum Rückmelden ihres Schaltzustands drahtlos oder über ein Datenkabel zu und von den Überstrom-Schutzeinrichtungen (15) übertragen werden.

9. Elektrische Niederspannungs-Gebäudeinstallation nach Anspruch 8, bei der hierfür ein Datenbus (19) vorgesehen ist,
die Überstrom-Schutzeinrichtungen (15) mit Buskopplern (21) an den Datenbus (19) gekoppelt sind, und
die Signale zur Fernsteuerung der Überstrom-Schutzeinrichtungen (15) und ggf. zum Rückmelden ihres Schaltzustands in Form von Telegrammen über den Datenbus (19) zu und von den Überstrom-Schutzeinrichtungen (15) übertragen werden.

10. Elektrische Niederspannungs-Gebäudeinstallation nach Anspruche 9, bei der der Datenbus (19) parallel zu der wenigstens einen Verteilerleitung (13) verläuft.

11. Elektrische Niederspannungs-Gebäudeinstallation nach einem der Ansprüche 1 bis 10, bei der die Überstrom-Schutzeinrichtungen (15) einen elektrischen Antrieb (23) zu deren ferngesteuerten Wiedereinschaltung aufweisen, und die Stromversorgung des Antriebs (23) aus der Verteilerleitung (13) vor der Trennstelle der Überstrom-Schutzeinrichtungen (15) erfolgt.

12. Elektrische Niederspannungs-Gebäudeinstallation nach einem der Ansprüche 9 oder 10, bei der die Überstrom-Schutzeinrichtungen (15) einen elektrischen Antrieb (23) zu deren ferngesteuerten Wiedereinschaltung aufweisen, und die Stromversorgung des Antriebs (23) aus dem Datenbus (19) erfolgt.

13. Elektrische Niederspannungs-Gebäudeinstallation nach einem der Ansprüche 1 bis 12, bei der die Überstrom-Schutzeinrichtungen (15) folgendes umfassen:
einen für manuelle, nicht aber ferngesteuerte Wiedereinschaltung ausgelegten Sicherungsautomaten (22), und
einen gesonderten, ferngesteuert steuerbaren elektrischen Antrieb (23), der mechanisch mit dem manuell betätigbaren Sicherungsautomaten (22) gekoppelt ist, und dazu eingerichtet ist, diesen durch eine Betätigungsbewegung entsprechend der auslegungsgemäßen manuellen Einschaltbewegung wieder einzuschalten.

14. Elektrische Niederspannungs-Gebäudeinstallation nach einem der Ansprüche 1 bis 13, bei der die Überstrom-Schutzeinrichtungen (15) nicht nur dazu eingerichtet sind, die Zweigleitung (14) bei Überstrom und Fehlerstrom lokal abzuschalten, sondern auch dazu, sie ferngesteuert auf Befehl abschalten zu können.

15. Elektrische Niederspannungs-Gebäudeinstallation nach einem der Ansprüche 9 bis 14, bei der die Schaltzentrale (17) an den Datenbus gekoppelt ist, und mittels der Telegramme mit den Überstrom-Schutzeinrichtungen (15) kommuniziert, wobei die Schaltzentrale (17) entfernt von der wenigstens einen Verteilerleitung (13) angeordnet ist.

16. Elektrische Niederspannungs-Gebäudeinstallation nach einem der Ansprüche 6 bis 15,
bei der die Schaltzentrale (17) eine Benutzerschnittstelle (18a) zur zentralen Befehlseingabe für die Fernsteuerung der verteilten Überstrom-Schutzeinrichtungen (15) aufweist, z.B. in Form eines Tastenfelds, und/oder
bei der die Schaltzentrale (17) eine Benutzerschnittstelle (18b) zur Visualisierung des Zustands der verteilten Überstrom-Schutzeinrichtungen (15) aufweist, z.B. in Form eines Bildschirms oder einer LED-Anzeige.

## Claims

1. Electrical low-voltage building installation in which at least one distribution line (13) and overcurrent protection devices (15) for line branches (12) to branch lines (14) are provided, wherein the line branches (12) are arranged in a distributed fashion in the building,
wherein the assigned overcurrent protection devices (15) are correspondingly arranged in a distributed fashion at the line branches (12), and
the overcurrent protection devices (15) arranged in a distributed fashion, after triggering, can be switched on again under remote control,
wherein the overcurrent protection devices (15) do not require a remote control function for interrupting their respective branch line (14), but rather bring about the interruption locally, i.e. on the basis of own ascertainment of an overcurrent,
**characterized in that**
the branch lines (14) have a reduced cross section compared with the distribution line (13),
the overcurrent protection devices (15) are arranged directly at the line branches (12) from the distribution line (13), and
the at least one distribution line (13) is formed by a ribbon cable (13a) having cores guided parallel in a plane,
the branch lines (14) are connected to the distribution line (13) by junction boxes (27) seated on the ribbon cable with contacting of the distribution line (13) without insulation stripping, and
the overcurrent protection devices (15) are integrated into the junction boxes (27) seated on the ribbon cable (13a), and
the overcurrent protection devices (15) are also embodied as residual current circuit-breakers (32) for switching off the respective branch line (14) not only in the case of an overload but also in the case of an unpermitted leakage current or fault current magnitude, wherein for the residual current circuit-breaker function, too, a remote control function is not required for interrupting the respective branch line (14), rather the interruption of the branch line (14) on account of fault current is brought about locally, i.e. on the basis of own ascertainment of a fault current by the relevant overcurrent protection devices (15).

2. Electrical low-voltage building installation according to Claim 1, wherein the distributed arrangement of the line branches (12) and assigned overcurrent protection devices (15) relates to the line installation downstream of an electricity meter (2) or - in the case of a plurality of electricity meters connected successively - downstream of the last electricity meter (2).

3. Electrical low-voltage building installation according to Claim 1 or 2, wherein the overcurrent protection devices (15) arranged in a distributed fashion are not arranged in a distribution cabinet, but rather are arranged along the at least one distribution line (13) that is guided into the vicinity of loads (7) of the building installation.

4. Electrical low-voltage building installation according to Claim 3, wherein the line branches (12) with cross-section reduction and the assigned overcurrent protection devices (15) are distributed along the distribution line (13) such that a minimum line length results for the distribution line (13) and the branch lines (14).

5. Electrical low-voltage building installation according to any of Claims 1 to 4, wherein the overcurrent protection devices (15) arranged in a distributed fashion are accommodated in hollow ceilings, hollow floors, hollow walls, cable ducts and/or flush-mounted boxes.

6. Electrical low-voltage building installation according to any of Claims 1 to 5, wherein the overcurrent protection devices (15) are controlled by a switching centre (17).

7. Electrical low-voltage building installation according to any of Claims 1 to 6, wherein the overcurrent protection devices (15) arranged in a distributed fashion are designed to communicate their present switching state to a switching centre (17).

8. Electrical low-voltage building installation according to any of Claims 1 to 7, wherein the signals for the remote control of the overcurrent protection devices (15) and, if appropriate, for reporting back the switching state thereof are transmitted wirelessly or via a data cable to and from the overcurrent protection devices (15).

9. Electrical low-voltage building installation according to Claim 8, wherein a data bus (19) is provided for this purpose,
the overcurrent protection devices (15) are coupled to the data bus (19) by bus couplers (21), and
the signals for the remote control of the overcurrent protection devices (15) and, if appropriate, for reporting back the switching state thereof are transmitted in the form of messages via the data bus (19) to and from the overcurrent protection devices (15).

10. Electrical low-voltage building installation according to Claim 9, wherein the data bus (19) runs parallel to the at least one distribution line (13).

11. Electrical low-voltage building installation according to any of Claims 1 to 10, wherein the overcurrent protection devices (15) have an electrical drive (23) for switching them on again under remote control, and the power supply of the drive (23) is effected from the distribution line (13) upstream of the isolation point of the overcurrent protection devices (15).

12. Electrical low-voltage building installation according to either of Claims 9 and 10, wherein the overcurrent protection devices (15) have an electrical drive (23) for switching them on again under remote control, and the power supply of the drive (23) is effected from the data bus (19).

13. Electrical low-voltage building installation according to any of Claims 1 to 12, wherein the overcurrent protection devices (15) comprise the following:
an automatic circuit-breaker (22) designed for switching on again manually, but not under remote control, and
a separate electrical drive (23), which is controllable under remote control and which is mechanically coupled to the manually actuatable automatic circuit-breaker (22), and is designed to switch the latter on again by means of an actuation movement corresponding to the designed manual switch-on movement.

14. Electrical low-voltage building installation according to any of Claims 1 to 13, wherein the overcurrent protection devices (15) are designed not only for locally switching off the branch line (14) in the case of overcurrent and fault current, but also for being able to switch it off under remote control upon command.

15. Electrical low-voltage building installation according to any of Claims 9 to 14, wherein the switching centre (17) is coupled to the data bus and communicates with the overcurrent protection devices (15) by means of the messages, wherein the switching centre (17) is arranged at a distance from the at least one distribution line (13).

16. Electrical low-voltage building installation according to any of Claims 6 to 15,
wherein the switching centre (17) has a user interface (18a) for centrally inputting commands for the remote control of the distributed overcurrent protection devices (15), e.g. in the form of a keypad, and/or
wherein the switching centre (17) has a user interface (18b) for visualizing the state of the distributed overcurrent protection devices (15), e.g. in the form of a screen or an LED display.

## Revendications

1. Installation de bâtiment à basse tension électrique, dans laquelle sont prévues au moins une ligne de distribution (13) et des protections de surintensité (15) pour des embranchements (12) vers des lignes de dérivation (14), les embranchements (12) étant agencés de manière répartie dans le bâtiment,
les protections de surintensité (15) affectées étant réparties de manière correspondante au niveau des embranchements (12), et
les protections de surintensité (15) agencées de manière répartie pouvant être réenclenchées par commande à distance après déclenchement,
les protections de surintensité (15) ne nécessitant pas de fonction de commande à distance pour couper leur ligne de dérivation (14) respective, mais causant la coupure localement, c.-à-d. par leur propre constatation d'une surintensité,
**caractérisée en ce que**
les lignes de dérivation (14) présentent une section transversale réduite par rapport à la ligne de distribution (13),
les protections de surintensité (15) sont agencées directement au niveau des embranchements (12) de la ligne de distribution (13), et
l'au moins une ligne de distribution (13) est formée par un câble méplat (13a) avec des fils guidés parallèlement dans un plan,
les lignes de dérivation (14) sont reliées à la ligne de distribution (13) par des boîtes de dérivation (27) positionnées sur le câble méplat avec mise en contact sans dénudage de la ligne de distribution (13), et
les protections de surintensité (15) sont intégrées dans les boîtes de dérivation (27) positionnées sur le câble méplat (13a), et
les protections de surintensité (15) sont formées également comme disjoncteur à courant de défaut (32) pour déconnecter la ligne de dérivation (14) respective, non seulement en cas de surcharge, mais également en cas de valeur non autorisée de courant de fuite ou de courant de défaut, la fonction de disjoncteur à courant de défaut ne nécessitant pas non plus de fonction de commande à distance pour couper la ligne de dérivation (14) respective, mais la coupure de la ligne de dérivation (14) étant causée par un courant de défaut localement, c.-à-d. sur la base d'une constatation d'un courant de défaut par les protections de surintensité (15) concernées elles-mêmes.

2. Installation de bâtiment à basse tension électrique selon la revendication 1, dans laquelle l'agencement réparti des embranchements (12) et des protections de surintensité (15) affectées se rapporte à l'installation de lignes après un compteur d'électricité (2) ou, en cas de présence de plusieurs compteurs d'électricité montés en série, après le dernier compteur d'électricité (2).

3. Installation de bâtiment à basse tension électrique selon la revendication 1 ou 2, dans laquelle les protections de surintensité (15) agencées de manière répartie ne sont pas agencées dans une armoire de distribution, mais sont agencées le long de l'au moins une ligne de distribution (13) qui est amenée à proximité de consommateurs (7) de l'installation de bâtiment.

4. Installation de bâtiment à basse tension électrique selon la revendication 3, dans laquelle les embranchements (12) avec réduction de section transversale et les protections de surintensité (15) affectées sont répartis le long de la ligne de distribution (13) de telle sorte qu'il en résulte pour la ligne de distribution (13) et les lignes de dérivation (14) une longueur de ligne minimale.

5. Installation de bâtiment à basse tension électrique selon l'une des revendications 1 à 4, dans laquelle les protections de surintensité (15) agencées de manière répartie sont logées dans des plafonds creux, des planchers creux, des murs creux, des caniveaux de câbles et/ou des boîtiers d'encastrement.

6. Installation de bâtiment à basse tension électrique selon l'une des revendications 1 à 5, dans laquelle les protections de surintensité (15) sont commandées par un centre de distribution (17).

7. Installation de bâtiment à basse tension électrique selon l'une des revendications 1 à 6, dans laquelle les protections de surintensité (15) agencées de manière répartie sont disposées pour transmettre leur état de commutation actuel à un centre de distribution (17).

8. Installation de bâtiment à basse tension électrique selon l'une des revendications 1 à 7, dans laquelle les signaux de commande à distance des protections de surintensité (15) et, le cas échéant, de retour de leur état de commutation, sont transmis sans fil ou via un câble de données vers et par les protections de surintensité (15).

9. Installation de bâtiment à basse tension électrique selon la revendication 8, dans laquelle un bus de données (19) est prévu à cet effet,
les protections de surintensité (15) sont couplées à des coupleurs de bus (21) au niveau du bus de données (19), et
les signaux de commande à distance des protections de surintensité (15) et, le cas échéant, de retour de leur état de commutation, sont transmis sous la forme de télégrammes par l'intermédiaire du bus de données (19) vers et par les protections de surintensité (15).

10. Installation de bâtiment à basse tension électrique selon la revendication 9, dans laquelle le bus de données (19) passe parallèlement à l'au moins une ligne de distribution (13).

11. Installation de bâtiment à basse tension électrique selon l'une des revendications 1 à 10, dans laquelle les protections de surintensité (15) présentent un entraînement électrique (23) en vue de leur réenclenchement commandé à distance, et l'alimentation en courant de l'entraînement (23) a lieu à partir de la ligne de distribution (13) avant le poste de sectionnement des protections de surintensité (15).

12. Installation de bâtiment à basse tension électrique selon l'une des revendications 9 ou 10, dans laquelle les protections de surintensité (15) présentent un entraînement électrique (23) en vue de leur réenclenchement commandé à distance, et l'alimentation en courant de l'entraînement (23) a lieu à partir du bus de données (19).

13. Installation de bâtiment à basse tension électrique selon l'une des revendications 1 à 12, dans laquelle les protections de surintensité (15) comprennent ce qui suit :
un interrupteur automatique (22) conçu pour un réenclenchement manuel, mais non commandé à distance, et
un entraînement électrique séparé commandable par commande à distance (23) qui est couplé mécaniquement à l'interrupteur automatique (22) actionnable manuellement, et qui est disposé pour réenclencher celui-ci par un mouvement d'actionnement correspondant au mouvement d'enclenchement manuel conforme à la conception.

14. Installation de bâtiment à basse tension électrique selon l'une des revendications 1 à 13, dans laquelle les protections de surintensité (15) ne sont pas seulement disposées pour déconnecter localement la ligne de dérivation (14) en cas de surcharge et de courant de défaut, mais également pour pouvoir la déconnecter par commande à distance suivant une instruction.

15. Installation de bâtiment à basse tension électrique selon l'une des revendications 9 à 14, dans laquelle le centre de distribution (17) est couplé au bus de données, et communique avec les protections de surintensité (15) à l'aide des télégrammes, le centre de distribution (17) étant agencé à distance de l'au moins une ligne de distribution (13).

16. Installation de bâtiment à basse tension électrique selon l'une des revendications 6 à 15,
dans laquelle le centre de distribution (17) comprend une interface utilisateur (18a) pour l'entrée centrale d'instructions pour la commande à distance des protections de surintensité (15) réparties, par exemple sous la forme d'un panneau de touches, et/ou
dans laquelle le centre de distribution (17) comprend une interface utilisateur (18b) pour visualiser l'état des protections de surintensité (15) réparties, par exemple sous la forme d'un écran ou d'un affichage à LED.
